# EUROPÄISCHE PATENTSCHRIFT

(11) **EP 3 653 449 B1**
(45) Veröffentlichungstag und Bekanntmachung des Hinweises auf die Patenterteilung: **31.03.2021**
(21) Anmeldenummer: 19208250.1
(22) Anmeldetag: 11.11.2019
(51) Int. Cl.: B60R 19/56, B60R 21/36

(54) **AUFPRALLSCHUTZVORRICHTUNG**
IMPACT PROTECTION DEVICE
DISPOSITIF DE PROTECTION CONTRE LES CHOCS

(30) Priorität: 16.11.2018 DE 102018128866
(43) Veröffentlichungstag der Anmeldung: 20.05.2020
(60) Teilanmeldung: 21157829.9
(73) Patentinhaber: MAN Truck & Bus SE, 80995 München (DE)
(72) Erfinder: Wagner, Philipp, 86316 Friedberg (DE); Fleischhacker, Jan, 82140 Olching (DE)
(74) Vertreter: v. Bezold & Partner Patentanwälte - PartG mbB

(56) Entgegenhaltungen:
- EP-A1- 2 894 067
- EP-A1- 3 187 378
- WO-A1-2010/000273
- DE-A1- 10 203 287
- DE-A1-102005 023 490
- US-B1- 6 450 556

## Beschreibung

Die vorliegende Erfindung betrifft eine Technik zum Aufprallschutz. Insbesondere ist eine Vorrichtung zum Aufprallschutz eines kabinenlosen Verkehrsteilnehmers an einer Längsseite eines Nutzfahrzeugs beschrieben.

Herkömmliche Nutzfahrzeuge wie beispielsweise Müllfahrzeuge, Stadtlieferwagen, etc., die im Ortsbereich verkehren, können für Fußgänger und Radfahrer abhängig vom Fahrverhalten ein besonderes Gefährdungspotential bedeuten. Insbesondere beim Rechtsabbiegen eines Linkslenkers kann ein Fußgänger oder Radfahrer für den Fahrer oder die Fahrerin eines Nutzfahrzeugs schwer oder spät zu erkennen sein, beispielsweise wenn ein Radfahrer mit hoher Geschwindigkeit in den Sichtbereich der rechten Außenspiegel des Nutzfahrzeugs einfährt. Um solche Gefahren zu reduzieren sind Nutzfahrzeuge mit Sensoren ausgestattet, die Radfahrer und Fußgänger im Fahrweg eines geplanten Abbiegevorgangs erkennen und ein akustisches und optisches Warnsignal im Fahrerhaus bewirken. Ferner beschreibt das Dokument DE 10 2009 041 557 A1 eine Vorrichtung, die das seitliche Umfeld eines Fahrzeugs überwacht und gegebenenfalls mittels einer Beleuchtungseinrichtung ausleuchtet.

Neben der wesentlich größeren Masse und Größe eines Nutzfahrzeugs führt auch die Bauweise des Nutzfahrzeugs zu spezifischen Gefährdungen für Radfahrer und Fußgänger. Die im Vergleich zu PKWs höhere Bodenfreiheit von Nutzfahrzeugen birgt für kleinere Unfallgegner das Risiko, unter das Fahrzeug zu geraten.

Dokument DE 102 03 287 A1 offenbart eine Sicherheitsvorrichtung für ein Fahrzeug mit wenigstens zwei Airbags, die mittels wenigstens einer Gasquelle aufblasbar sind. Zwischen der Gasquelle und den Airbags ist ein zentraler Gasverteiler angeordnet, über den ein Gasstrom aus der Gasquelle in Abhängigkeit von mittels einer Sensoreinrichtung bestimmten Crashparametern in mindestens einen der Airbags verteilbar ist.

Dokument US 6 450 556 B1 offenbart ein externes System mit einem Airbag, der an einer Unterseite des Fahrzeugs in einer Position seitlich nach innen beabstandet zur seitlichen Fahrzeugaußenseite angebracht ist. Ein Sensor erfasst eine Kollision des Fahrzeugs mit einem kollidierenden Fahrzeug und bläst in Reaktion darauf den Airbag unterhalb des Fahrzeugs auf, um dadurch Energie aus dem kollidierenden Fahrzeug zu absorbieren und ein Unterfahren zu verhindern.

Dokument WO 2010/000273 A1 offenbart eine Anordnung von aktiven Airbags, die außerhalb eines Fahrzeugs ausgelöst werden. Die Airbags sind zusammengefaltet in der Karosserie oder in ihren Komponenten eingebaut, und können durch Erkennen von Stößen und Kollisionen, bevor sie auftreten, ausgelöst werden.

Dokument EP 2 894 067 A1 offenbart ein externes Seitenairbagsystem, das mindestens einen Airbag mit mindestens einem speziellen Gasgenerator umfasst. Mindestens ein Airbag weist in einem gefalteten Zustand eine längliche Form auf, die sich in Längsrichtung erstreckt und so konfiguriert ist, dass sie in eine Seitenstruktur eines Fahrzeugs integriert ist.

Dokument DE 10 2005 023 490 A1 offenbart eine Airbageinrichtung mit einem ersten Gassack, welcher derart am Karosseriebereich eines Kraftfahrzeuges angeordnet ist, dass er zwischen dem Karosseriebereich und einem außerhalb des Kraftfahrzeuges befindlichen Kollisonsobjekt aufblasbar ist, und einem zweiten, zum Schutz eines Fahrzeuginsassen aufblasbaren Gassack, der zur Anordnung in der Fahrgastzelle des Kraftfahrzeuges ausgebildet ist. Der erste und der zweite Gassack sind zum Gasaustausch mittels einer gasleitfähigen Verbindung verbunden.

Dokument EP 3 187 378 A1 offenbart ein Fußgängerschutzsystem mit einem externen Airbagsystem, das einen externen Airbag außerhalb des Fahrzeugs auslöst. Im Betrieb empfängt ein Prozessor das Signal eines ersten Sensors, verarbeitet das Signal, um den Gefahrenzustand zu erkennen, und aktiviert das externe Airbagsystem als Reaktion auf den erkannten Gefahrenzustand.

Somit besteht die Aufgabe, Unfallgefahren für schwächere Unfallgegner aufgrund von Nutzfahrzeug-spezifischen Unfallverläufen, die anders als bei PKWs sind, auszuschließen oder zu reduzieren. Eine Alternative oder weitere Aufgabe ist, ein Verletzungsrisiko für kleinere Verkehrsteilnehmer bei einem insbesondere beifahrerseitigen Abbiegevorgang des Nutzfahrzeugs zu verringern.

Diese Aufgabe oder Aufgaben werden durch eine Technik mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt ist eine Vorrichtung zum Aufprallschutz eines kabinenlosen Verkehrsteilnehmers an einer Längsseite eines Nutzfahrzeugs bereitgestellt. Die Vorrichtung kann mindestens einen an einer Längsseite des Nutzfahrzeugs angeordneten Airbag umfassen. Ferner kann die Vorrichtung Sensoren umfassen, die dazu ausgebildet sind, eine Annäherung des kabinenlosen Verkehrsteilnehmers an die Längsseite zu erfassen. Alternativ oder ergänzend kann die Vorrichtung eine mit den Sensoren und/oder dem mindestens einen Airbag in Signalverbindung stehende Steuerung umfassen, die dazu ausgebildet ist, aufgrund von Signalen der Sensoren eine Wahrscheinlichkeit, einen Ort und/oder einen Zeitpunkt einer bevorstehenden Kollision zu bestimmen. Ferner kann die Vorrichtung dazu ausgebildet sein, abhängig von der bestimmten Wahrscheinlichkeit, dem bestimmten Ort und/oder dem bestimmten Zeitpunkt den mindestens einen Airbag zu aktivieren.

Ausführungsbeispiele der Vorrichtung können durch die Bauweise von Nutzfahrzeugen bedingte spezifische Unfallgefahren reduzieren. Beispielsweise kann der mindestens eine an der Längsseite des Nutzfahrzeugs angeordnete Airbag eine Bodenfreiheit des Nutzfahrzeugs verschließen oder überdecken. Alternativ oder ergänzend kann der mindestens eine an der Längsseite des Nutzfahrzeugs angeordnete Airbag dazu ausgebildet sein, seinen Verlauf entlang der Längsseite an die Situation und/oder die Form der geknickten Längsseite beim Abbiegevorgang anzupassen, beispielsweise mittels eines mehrteiligen Airbag-Systems.

Das Nutzfahrzeug kann ein Straßenfahrzeug, insbesondere ein Lastwagen (beispielsweise für den Verteilerverkehr oder den Fernverkehr), ein Sattelzug, eine Zugmaschine oder ein Bus (beispielsweise ein Linienbus oder ein Überlandbus) sein. Der kabinenlose Verkehrsteilnehmer kann ein Fußgänger, Radfahrer (beispielsweise Zweiradfahrer), ein Nutzer eines Segway Personal Transporter, ein Nutzer von Inlineskates oder ein Nutzer eines (beispielsweise elektrisch betriebenen) Rollbretts (englisch: Hoverboard) sein.

Das Bestimmen der Wahrscheinlichkeit für die bevorstehende Kollision kann das Bestimmen eines wahrscheinlichen Kollisionsorts (oder einer Wahrscheinlichkeitsverteilung des Orts der Kollision) und/oder eines wahrscheinlichen Kollisionszeitpunkts (oder einer Wahrscheinlichkeitsverteilung der Zeit der Kollision) umfassen.

Die Sensoren können eine Position und/oder eine Bewegung des kabinenlosen Verkehrsteilnehmers relativ zum Nutzfahrzeug (d. h. Relativgrößen) erfassen. Die Steuerung kann aufgrund der Relativgrößen die Wahrscheinlichkeit für eine bevorstehende Kollision bestimmen. Alternativ oder ergänzend kann einer oder können mehrere der Sensoren eine Fahrgeschwindigkeit und/oder eine Fahrtrichtung des Nutzfahrzeugs (d. h. Eigengrößen) erfassen. Ferner kann einer oder können mehrere der Sensoren eine Fahrgeschwindigkeit und eine Fahrtrichtung des kabinenlosen Verkehrsteilnehmers relativ zur Fahrbahn (d. h. Fremdgrößen) erfassen. Die Steuerung kann durch Kombination der Fremdgrößen mit den Eigengrößen die Wahrscheinlichkeit für eine bevorstehende Kollision bestimmen. Die erfassten Eigengrößen können einen Lenkwinkel des Nutzfahrzeugs umfassen.

Die Steuerung kann den mindestens einen Airbag aktivieren, falls (beispielsweise zu einem Zeitpunkt wenn) die bestimmte Wahrscheinlichkeit einen Schwellwert der Aktivierung übersteigt. Der Schwellwert der Aktivierung kann vorbestimmt sein oder von der schwere des bevorstehenden Kollision abhängen, beispielsweise von einer Relativgeschwindigkeit. Einer zweiten Relativgeschwindigkeit, die größer als eine erste Relativgeschwindigkeit ist, kann ein zweiter Schwellwert der Aktivierung zugeordnet sein, der kleinerer ist als ein der ersten Relativgeschwindigkeit zugeordneter erster Schwellwert der Aktivierung. Alternativ oder ergänzend, kann die Steuerung den mindestens einen Airbag aktivieren, falls (beispielsweise nur falls oder erst falls) der bestimmte Kollisionsort die Längsseite des Nutzfahrzeugs betrifft.

Vor und/oder bei der Aktivierung des mindestens einen Airbags kann in einem Fahrerhaus des Nutzfahrzeugs, an einem Fahrerplatz des Nutzfahrzeugs und/oder an einer A-Säule der Längsseite ein optisches und/oder akustisches Signal (Innensignal) aufgrund der erfassten Annäherung ausgegeben werden. Beispielsweise kann die Steuerung dazu ausgebildet sein, das optische und/oder akustische Signal auszugeben, wenn die bestimmte Wahrscheinlichkeit einen Schwellwert einer Innenwarnung übersteigt. Der Schwellwert der Innenwarnung kann kleiner sein als der Schwellwert der Aktivierung, beispielsweise kleiner als jeder (beispielsweise von der Relativgeschwindigkeit abhängige) Schwellwert der Aktivierung. So kann der Fahrer oder die Fahrerin des Nutzfahrzeugs vor der Aktivierung gewarnt werden, einen Bremsvorgang auslösen und eventuell noch verhindern, dass der Schwellwert der Aktivierung erreicht wird und/oder die Kollision eintritt.

Alternativ oder ergänzend kann vor und/oder bei der Aktivierung des mindestens einen Airbags ein optisches und/oder akustisches Signal im Außenbereich des Nutzfahrzeugs und/oder außen an der Längsseite (Außensignal) aufgrund der erfassten Annäherung ausgegeben werden. Beispielsweise kann die Steuerung dazu ausgebildet sein, das optische und/oder akustische Außensignal auszugeben, wenn die bestimmte Wahrscheinlichkeit einen Schwellwert einer Außenwarnung übersteigt. Das akustische Außensignal kann mittels einer Hupe des Nutzfahrzeugs ausgegeben werden. Das optische Außensignal kann an der Längsseite mittels (beispielsweise schnell blinkenden) Fahrtrichtungsanzeigern, Positionsleuchten und/oder Begrenzungslichtern ausgegeben werden. Der Schwellwert der Außenwarnung kann kleiner sein als der Schwellwert der Aktivierung, beispielsweise kleiner als jeder (beispielsweise von der Relativgeschwindigkeit abhängige) Schwellwert der Aktivierung. Der Schwellwert der Außenwarnung kann gleich sein wie oder größer sein als der Schwellwert der Innenwarnung. Die Steuerung kann dazu ausgebildet sein, in Reaktion auf die erfasste Annäherung des kabinenlosen Verkehrsteilnehmers bei oder vor der Aktivierung des mindestens einen Airbags das Außenwarnsignal auszugeben, vorzugsweise durch Steuern der Hupe des Nutzfahrzeugs.

Jeder Airbag kann (beispielsweise jeweils) mindestens einen Gasgenerator umfassen. Der Gasgenerator kann dazu ausgebildet sein, den jeweiligen Airbag innerhalb einer ersten Zeitspanne mit Gas zu befüllen. Alternativ oder ergänzend kann jeder Airbag (beispielsweise jeweils) mindestens einen Druckbehälter mit Kaltgas umfassen oder mit einem solchen in Fluidverbindung stehen. Das Aktivieren kann ein Öffnen eines Ventils am Druckbehälter oder ein Zünden einer Sprengladung am Druckbehälter umfassen, wodurch das Kaltgas aus dem Druckbehälter innerhalb der ersten Zeitspanne den jeweiligen Airbag befüllt.

Die Steuerung kann eine zweite Zeitspanne vor der bevorstehenden Kollision den mindestens einen Airbag aktivieren, beispielswiese dessen Gasgenerator aktivieren oder das Öffnen des Druckbehälters steuern. Die zweite Zeitspanne kann größer als die erste Zeitspanne sein.

Der mindestens eine Airbag kann Öffnungen aufweisen, durch die nach dem Befüllen (beispielsweise unmittelbar im Anschluss an das Befüllen) Gas während einer dritten Zeitspanne entweicht. Der mindestens eine Airbag kann während der dritten Phase ein für die Absorption der Energie der Kollision ausreichendes Volumen aufweisen. Die Differenz zwischen der zweiten und ersten Zeitspanne kann kleiner als die dritte Zeitspanne sein.

Alternativ oder in Kombination kann der mindestens eine Airbag Öffnungen aufweisen, durch die im Anschluss an das Befüllen nach einer dritten Zeitspanne Gas entweicht. Die Öffnungen können Ventile umfassen, die zur Einhaltung der dritten Zeitspanne von der Steuerung gesteuert werden. Die Steuerung kann die Ventile nach Ablauf oder während der dritten Zeitspanne öffnen. Beispielsweise kann der befüllte Zustand des jeweiligen Airbags während der dritten Phase aufrechterhalten bleiben. Der mindestens eine Airbag kann während der dritten Phase ein für die Absorption der Energie der Kollision ausreichendes Volumen aufweisen. Beispielsweise regelt die Steuerung währen der dritten Phase einen (beispielsweise abfallenden Druck) im Airbag. Die Differenz zwischen der zweiten Zeitspanne und der ersten Zeitspanne kann kleiner als die dritte Zeitspanne sein.

Der mindestens eine Airbag kann mindestens einen ersten Airbag umfassen, der im gasbefüllten Zustand am Boden anliegt. Der mindestens eine erste Airbag kann dazu ausgebildet sein, im gasbefüllten Zustand die Bodenfreiheit des Nutzfahrzeugs an der Längsseite zu verschließen oder zu überdecken. Der mindestens eine erste Airbag kann auch als abschließender Airbag bezeichnet werden.

Alternativ oder ergänzend kann der mindestens eine Airbag mindestens einen zweiten Airbag umfassen, der im gasbefüllten Zustand vom Boden beabstandet ist. Der mindestens eine zweite Airbag kann, beispielsweise in der dritten Zeitspanne, eine kinetische Energie des kabinenlosen Verkehrsteilnehmers teilweise oder vollständig absorbieren und/oder eine Kraft der Wechselwirkung zwischen dem kabinenlosen Verkehrsteilnehmer und dem Nutzfahrzeug bei der Kollision auf eine größere Fläche verteilen (beispielsweise zur Verringerung eines Anpressdrucks). Der mindestens eine zweite Airbag kann auch als abfangender Airbag bezeichnet werden.

Der mindestens eine zweite Airbag kann im gasbefüllten Zustand von der Längsseite des Nutzfahrzeugs horizontal weiter hervorstehen, auskragen oder abstehen als der erste Airbag im gasbefüllten Zustand von der Längsseite des Nutzfahrzeugs horizontal hervorsteht, auskragt oder absteht. Senkrecht zur Längsseite kann der mindestens eine zweite Airbag im gasbefüllten Zustand breiter sein als der mindestens eine erste Airbag im gasbefüllten Zustand. Alternativ oder ergänzend kann der mindestens eine zweite Airbag im gasbefüllten Zustand weiter von der Längsseite beabstandet verankert sein im Vergleich zu einer Verankerung des mindestens einen ersten Airbags.

Die Steuerung kann ferner dazu ausgebildet sein, einen (beispielsweise bevorstehenden und/oder geplanten) Abbiegevorgang des Nutzfahrzeugs zur Beifahrerseite zu erfassen (d. h. zu erkennen). Beispielsweise kann der Abbiegevorgang aufgrund einer Fahrgeschwindigkeit, eines Lenkwinkels und/oder eines gesetzten Fahrtrichtungsanzeigers erfasst werden.

Die Steuerung ist erfindungsgemäss dazu ausgebildet, abhängig von einer Kurventrajektorie des Nutzfahrzeugs die Wahrscheinlichkeit der bevorstehenden Kollision, den Ort und/oder den Zeitpunkt der bevorstehenden Kollision zu berechnen. Beispielsweise kann die Steuerung den mindestens einen Airbag aktivieren, falls der Kollisionsort (auch: Kollisionspunkt) auf der Kurventrajektorie hinter einem durch einen Bremsvorgang des Nutzfahrzeugs erreichbaren Haltepunkt liegt. Der Bremsvorgang kann automatisiert oder durch einen Fahrer oder eine Fahrerin des Nutzfahrzeugs ausgelöst sein.

Die Sensoren können eine Position und Geschwindigkeit des kabinenlosen Verkehrsteilnehmers erfassen. Die Steuerung kann ferner dazu ausgebildet sein, die Wahrscheinlichkeit der bevorstehenden Kollision, einen Schweregrad der bevorstehenden Kollision, den Ort der bevorstehenden Kollision und/oder den Zeitpunkt der bevorstehenden Kollision abhängig von der erfassten Position und/oder Geschwindigkeit zu berechnen.

Das Nutzfahrzeug kann eine Sattelzugmaschine und/oder einen Sattelauflieger umfassen. Der mindestens eine zweite Airbag kann mehrteilige oder mehrere entlang der Längsseite benachbarte Airbags umfassen. Der mindestens eine zweite Airbag kann dazu angeordnet sein, entsprechend einem Knickwinkel einer Sattelkupplung zwischen der Sattelzugmaschine und dem Sattelauflieger einen Knickwinkel zwischen den benachbarten Airbags auszubilden.

Alternativ oder ergänzend kann der mindestens eine zweite Airbag mehrteilige oder mehrere entlang der Längsseite benachbarte Airbags umfassen, die jeweils mit einem Gasgenerator oder Druckbehälter in Fluidverbindung stehen und zeitgleich aktivierbar sind. Dadurch können die zweiten Airbags über eine ausgedehnte Länge oder die gesamte Länge der Längsseite synchron aktiviert werden.

Die Längsseite kann die Beifahrerseite des Nutzfahrzeugs sein. Optional können die Airbags und/oder Sensoren an beiden Längsseiten des Nutzfahrzeugs angeordnet sein.

Jeder Airbag kann mindestens einen Gasgenerator umfassen und/oder mit mindestens einem Gasgenerator in Fluidverbindung stehen. Ein den Airbag befüllendes Gas kann durch Abbrennen einer Treibladung und/oder Öffnen eines Druckbehälters dem Airbag zugeführt werden. Jeder Gasgenerator kann mindestens einen elektronischen Zünder und mindestens eine durch den elektronischen Zünder abbrennbare Treibladung umfassen. Das Aktivieren kann ein elektrisches Signal von der Steuerung zum jeweiligen Generator umfassen.

Das Nutzfahrzeug kann eine Gelenkstelle umfassen, beispielsweise eine Sattelkupplung zwischen der Sattelzugmaschine und dem Sattelauflieger. Alternativ oder ergänzend kann das Nutzfahrzeug eine Anhängerkupplung als Gelenkstelle zwischen einem Lastkraftwagen (LKW) und einem Anhänger des LKWs umfassen. Alternativ oder ergänzend kann das Nutzfahrzeug einen Gelenkbus mit der Gelenkstelle zwischen Vorder- und Hinterwagen umfassen. Mindestens ein Airbag des mindestens einen Airbags kann dazu ausgebildet sein, einen Spalt an der Gelenkstelle, beispielsweise einen Spalt zwischen der Sattelzugmaschine und dem Sattelauflieger, auf zumindest einer horizontalen Ebene zu überdecken.

Gemäß einem weiteren Aspekt ist ein Nutzfahrzeug, insbesondere ein Sattelzug, bereitgestellt, das eine Vorrichtung gemäß dem vorstehenden Aspekt in einer der Ausführungsvarianten umfasst.

Ausführungsbeispiele der Aspekte können, insbesondere für Nutzfahrzeuge, die Unfallfolgen für schwächere Verkehrsteilnehmer erheblich mindern. Insbesondere können die Unfallfolgen für einen kabinenlosen Querverkehr und/oder kabinenlose Verkehrsteilnehmer bei Abbiegevorgängen gemindert werden.

Die Sensoren können Kameras und/oder andere Sensoren zum Detektieren der seitlichen Annäherung des kabinenlosen Verkehrsteilnehmers (z. B. eines Radfahrers) umfassen. Der mindestens eine Airbag kann ein Airbag-System umfassen, das beispielsweise an die Längsseite des Nutzfahrzeugs und/oder dessen Bewegung beim Abbiegevorgang angepasst ist. Durch das Aktivieren des mindestens einen Airbags kann ein Aufprall des kabinenlosen Verkehrsteilnehmers an der Längsseite des Nutzfahrzeugs gemindert werden oder verhindert werden, dass der kabinenlose Verkehrsteilnehmer unter das Nutzfahrzeug gerät.

Weitere Merkmale und Vorteile der Erfindung werden im Folgenden unter Bezugnahme auf die beigefügten Zeichnungen beschrieben. Es zeigen:
- Figur 1: eine Frontansicht eines ersten Ausführungsbeispiels einer Vorrichtung zum Aufprallschutz eines kabinenlosen Verkehrsteilnehmers an einer Längsseite eines Nutzfahrzeugs;
- Figur 2: eine Draufsicht eines zweiten Ausführungsbeispiels der Vorrichtung mit durchgehenden Airbags;
- Figur 3: eine Draufsicht eines dritten Ausführungsbeispiels der Vorrichtung mit mehrgliedrigen Airbags; und
- Figur 4: eine Draufsicht eines vierten Ausführungsbeispiels der Vorrichtung im Abbiegevorgang.

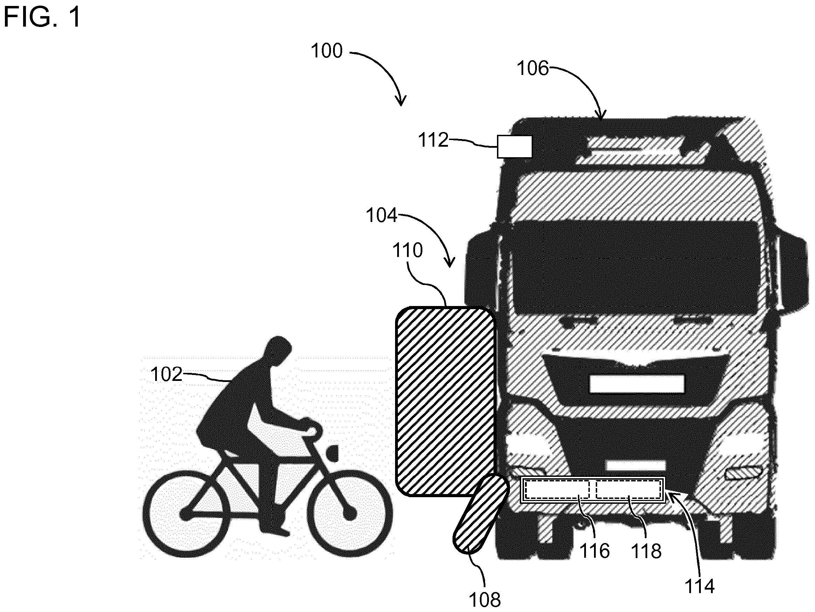

Figur 1 ist eine Frontansicht eines Ausführungsbeispiels einer allgemein mit Bezugszeichen 100 bezeichneten Vorrichtung zum Aufprallschutz eines kabinenlosen Verkehrsteilnehmers 102, vorzugsweise an einer Längsseite 104 des Nutzfahrzeugs.

Die Vorrichtung 100 umfasst mindestens einen an der Längsseite 104 des Nutzfahrzeugs 106 angeordneten Airbag 108 und 110, und/oder eine Airbag-Signalschnittstelle, die mit dem an der Längsseite 104 des Nutzfahrzeugs 106 angeordneten Airbag 108 und 110 verbindbar ist. Ferner umfasst die Vorrichtung 100 Sensoren 112, die dazu ausgebildet sind, eine Annäherung des kabinenlosen Verkehrsteilnehmers 102 an die Längsseite 104 zu erfassen, und/oder eine Sensor-Signalschnittstelle, die mit den Sensoren 112 verbindbar ist.

Ferner umfasst die Vorrichtung eine mit den Sensoren 112 und dem mindestens einen Airbag 108 und 110 in Signalverbindung stehende Steuerung 114, die dazu ausgebildet ist, aufgrund von Signalen der Sensoren 112 eine Wahrscheinlichkeit, einen Ort und/oder einen Zeitpunkt einer bevorstehende Kollision zu bestimmen und abhängig davon den mindestens einen Airbag 108 und 110 zu aktivieren.

Die Steuerung 114 kann einen Speicher 116 und einen mit dem Speicher 116 in Signalverbindung stehenden Prozessor 118 umfassen. Im Speicher 116 können ein oder mehrere Schwellwerte zur bestimmten Wahrscheinlichkeit hinterlegt sein. Im Speicher 116 können ein oder mehrere Schwellwerte zur bestimmten Wahrscheinlichkeit und/oder Verfahrensschritte zur Bestimmung der Wahrscheinlichkeit, des Orts und/oder des Zeitpunkts der Kollision hinterlegt sein. Der Prozessor 118 kann zur Ausführung dieser Verfahrensschritte ausgebildet sein.

Durch die aufgrund der Sensoren 112 zeitgerechte Aktivierung des mindestens einen Airbags 108 und 110 kann die Verletzungsschwere oder Letalität für den kabinenlosen Verkehrsteilnehmer 102 als schwächeren Unfallgegner bei einer Kollision im Seitenbereich 104 des Nutzfahrzeugs 106 reduziert werden. Ausführungsbeispiele der Vorrichtung 100 können insbesondere bei Verletzungsgefahren durch Kollisionen zwischen dem Nutzfahrzeug 106 und dem kabinenlosen Verkehrsteilnehmer 102 (beispielsweise einem Radfahrer) beim Rechtsabbiegen des linkslenkenden Nutzfahrzeugs (und umgekehrt für einen Rechtslenker) reduzieren.

Der mindestens eine Airbag kann ein mehrteiliges Airbag-System umfassen. Beispielsweise kann der mindestens eine Airbag mindestens einen abschließenden Airbag 108 umfassen.

Der abschließende Airbag 108 kann als Abschottungsairbag oder Boden-Airbag ausgebildet sein. D. h., der abschließende Airbag 108 kann dazu ausgebildet sein, im Falle einer seitlichen Kollision mit einem schwächeren Unfallgegner 102 diesen davor zu schützen, unter das Nutzfahrzeug 106 zu geraten.

Alternativ oder in Kombination kann der mindestens eine Airbag einen abfangenden Airbag 110 umfassen. Der abfangende Airbag 110 kann als Aufprall-Airbag ausgebildet sein. D. h., der abfangende Airbag 110 kann dazu ausgebildet sein, im Falle einer seitlichen Kollision mit einem schwächeren Unfallgegner 102 den Aufprall für diesen zu reduzieren.

Dabei wird über die Sensoren 112 (d. h. eine entsprechende Sensorik) die seitliche Annäherung eines Unfallgegners 102, insbesondere eines Radfahrers, detektiert. Die Sensorik 112 kann dabei z. B. Kameras, Ultraschall-, Radar- und/oder LiDAR-Sensoren umfassen und deren Signale gegebenenfalls geeignet fusionieren. Diese Funktionalitäten (beispielsweise Sensorik und Auswertung deren Signale) sind aus dem Stand der Technik zu Abbiegeassistenzsystemen bekannt.

Im Falle einer durch die Steuerung 114 bestimmten, unvermeidlichen Kollision wird zunächst ein Airbag im unteren Bereich, beispielsweise der abschließende Airbag 108, ausgelöst. Der abschließende Airbag 108 schließt den Raum zwischen dem Nutzfahrzeug 106 und dessen Untergrund (beispielsweise dessen Fahrbahn) und verhindert damit, dass der Unfallgegner 102 unter das Nutzfahrzeug 106 geraten kann. Vorzugsweise wird der abschließende Airbag 108 erst deutlich nach dem Ende der Unfallsituation entlüftet. Beispielsweise sind eine Anzahl und/oder Größe von Entlüftungsöffnungen im abschließende Airbag 108 so klein gewählt, dass die Phase der Entlüftung (beispielsweise die dritte Zeitspanne) mehrere Sekunden umfasst.

Gleichzeitig bewirkt die Steuerung 114 oder eine separate Abbiegeassistenz-Steuerung, dass das Nutzfahrzeug 106 (beispielsweise im Fall eines Abbiegevorgangs zur Beifahrerseite, also in Rechtsabbiegesituationen beim Linkslenker, aus meist geringer Geschwindigkeit) bis zum Stillstand abbremst.

Der Aufprall-Airbag 110 wird ausgelöst und so entlüftet, dass der Unfallgegner nicht in den expandierenden, sondern in den bereits nachgebenden (d. h. kontrahierenden) Airbag 110 eintaucht. Ein Volumen des Aufprall-Airbags 110 ist so bemessen, dass dessen Größe ausreicht, um genügend Aufprallenergie zu mindern, während der Aufprall-Airbag 110 nur noch teilgefüllt ist und weiter nachgibt.

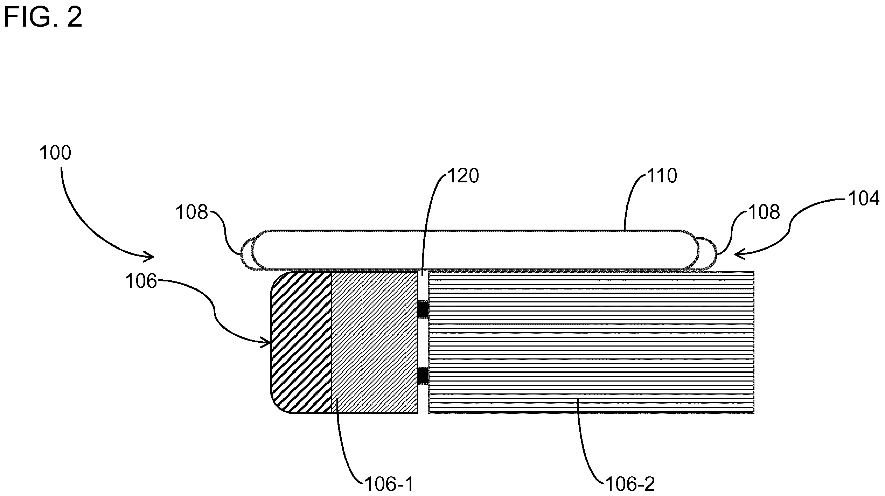

Die Figur 2 zeigt ein zweites Ausführungsbeispiel der Vorrichtung 100 für ein Nutzfahrzeug 106. Das Nutzfahrzeug 106 kann ein LKW oder beispielsweise ein Sattelzug mit Zugfahrzeug 106-1 und Sattelauflieger 106-2 sein. Das zweite Ausführungsbeispiel kann ein eigenständiges Ausführungsbeispiel der Vorrichtung 100 sein oder einzelne oder alle Merkmale des ersten Ausführungsbeispiels übernehmen. Übereinstimmende oder austauschbare Merkmale sind mit denselben Bezugszeichen versehen. Beispielsweise kann die Figur 2 eine Draufsicht des in Figur 1 gezeigten ersten Ausführungsbeispiels sein.

Bei dem in Figur 2 gezeigt zweiten Ausführungsbeispiel ist der Aufprall-Airbags 110 durch einen sich entlang der Längsseite 104 durchgehend erstreckenden Airbag realisiert.

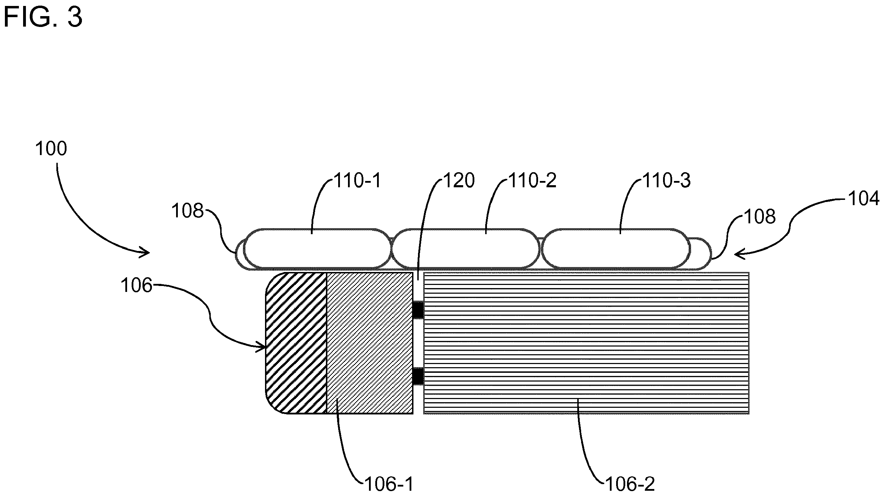

Alternativ kann vorteilhaft sein, beispielsweise wie bei dem in Figur 3 schematisch dargestellten dritten Ausführungsbeispiel, statt eines Airbags 110 mehrere einzelne kleinere Airbags 110-1, 110-2, 110-3, etc. einzuführen bzw. an der Längsseite 104 anzuordnen, die sich aufgrund geringerer Größe schneller füllen lassen sollten.

Ein eventuell an der Längsseite bestehender (beispielsweise vertikaler) Spalt 120, beispielsweise hinter dem Fahrerhaus 106-1 des Nutzfahrzeugs und/oder zwischen LKW und LKW-Anhänger, kann im gasbefüllten Zustand von mindestens einem Airbag 108 und/oder 110 horizontal überdeckt werden. Vorzugsweise überdecken sowohl der Abschottungsairbag 108 als auch der Aufprall-Airbag 110 einen solchen Spalt 120.

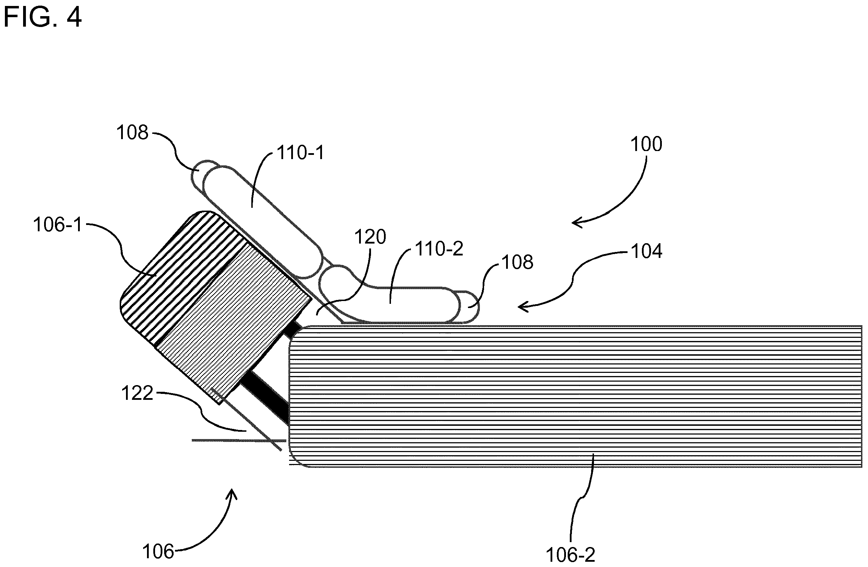

Figur 4 zeigt ein viertes Ausführungsbeispiel der Vorrichtung 100 im Kontext eines Abbiegevorgangs. Während die Abbiegesituation hier für einen Sattelzug als Nutzfahrzeug 106 mit Zugfahrzeug 106-1 (auch: Sattelzugmaschine) und Sattelauflieger 106-2 (auch: Trailer) dargestellt ist, können Varianten der Ausführungsbeispiele auch bei anderen Nutzfahrzeugen, insbesondere bei einem LKW mit LKW-Anhänger und einem Gelenkbus eingesetzt werden.

Bei einem Nutzfahrzeug 106 mit Gelenk ist eine mehrteilige (auch: mehrgliedrige) Ausgestaltung des ersten Airbags 108 und/oder des zweiten Airbags 110 vorteilhaft. Beispielsweise bei der in Figur 4 schematisch gezeigten Sattelzugmaschine 106-1 (als das Nutzfahrzeug 106 oder als Teil Nutzfahrzeug 106) sollte die Gestaltung, Formgebung oder Gliederung des mindestens einen Airbags 108 und/oder 110 auch den vorderen Teil des Trailers 106-2 und den Spalt 120 zwischen Trailer 106-2 und Fahrerhaus am Sattelzugmaschine 106-1 abdecken. Vorzugsweise gilt dies sowohl für den Abschottungsairbag 108 als auch den Aufprall-Airbag 110.

Der bei Abbiegevorgängen übliche Knickwinkel 122 zwischen Zugmaschine 106-1 und Trailer 106-2 kann durch eine entsprechende Gestaltung des mindestens einen Airbags 108 und 110 berücksichtigt werden. Beispielsweise kann die der Längsseite 104 des Nutzfahrzeugs zugewandte Fläche des Abschottungsairbags 108 und/oder des Aufprall-Airbags 110 in Längsrichtung länger und/oder elastischer sein als auf der Längsseite 104 abgewandten Seite des jeweiligen Airbags 108 bzw. 110.

Die Merkmale der vorstehend beschriebenen Ausführungsbeispiele sind einzeln kombinierbar. Insbesondere können in jedem Ausführungsbeispiele Kameras (z. B. vorhandene für ein Fahrerassistenzsystem) und/oder die vorhandene Fahrzeugsensorik bezüglich Geschwindigkeit, Lenkwinkel, etc. als Eingangssensorik 112 dienen.

In einer ersten Variante jedes Ausführungsbeispiels kann die Vorrichtung 100, insbesondere ein entsprechendes Airbag-System 108 und 110, als Ergänzung zu einem Abbiegeassistent betrieben werden. Ferner kann die Aktivierung (auch: Auslösung) mit einem Notruf verknüpft werden, der beispielsweise über ein Fahrzeugnotruf-Modul ausgelöst bzw. gesendet wird.

In einer mit der ersten Variante optional kombinierbaren zweiten Variante kann die Vorrichtung 100 auch alleine durch die Abschottungsairbags 108 einen Großteil der Funktion erfüllen, insbesondere kann ein Überrollen des kabinenlosen Verkehrsteilnehmers vermieden werden.

### Bezugszeichenliste

- 100: Vorrichtung zum Aufprallschutz
- 102: Kabinenloser Verkehrsteilnehmer
- 104: Längsseite
- 106: Nutzfahrzeug
- 106-1: Zugfahrzeug oder Sattelzugmaschine
- 106-2: Sattelauflieger oder Trailer
- 108: Abschließender Airbag
- 110: Abfangender Airbag
- 112: Sensoren zum Erfassen des kabinenlosen Verkehrsteilnehmers
- 114: Steuerung
- 116: Speicher
- 118: Prozessor
- 120: Spalt an der Längsseite
- 122: Knickwinkel des Nutzfahrzeugs

## Patentansprüche

1. Vorrichtung (100) zum Aufprallschutz eines kabinenlosen Verkehrsteilnehmers (102) an einer Längsseite (104) eines Nutzfahrzeugs (106), umfassend:
mindestens einen an einer Längsseite (104) des Nutzfahrzeugs (106) angeordneten Airbag (108, 110);
Sensoren (112), die dazu ausgebildet sind, eine Annäherung des kabinenlosen Verkehrsteilnehmers (102) an die Längsseite (104) zu erfassen; und
eine mit den Sensoren (112) und dem mindestens einen Airbag (108, 110) in Signalverbindung stehende Steuerung (114), die dazu ausgebildet ist, aufgrund von Signalen der Sensoren (112) eine Wahrscheinlichkeit, einen Ort und/oder einen Zeitpunkt einer bevorstehende Kollision zu bestimmen und abhängig davon den mindestens einen Airbag (108, 110) zu aktivieren;
**dadurch gekennzeichnet, dass**
die Steuerung (114) ferner dazu ausgebildet ist, einen Abbiegevorgang des Nutzfahrzeugs (106) zur Beifahrerseite zu erfassen, und abhängig von einer Kurventrajektorie des Nutzfahrzeugs (106) die Wahrscheinlichkeit der bevorstehenden Kollision, den Ort und/oder den Zeitpunkt der bevorstehenden Kollision zu berechnen.

2. Vorrichtung nach Anspruch 1, wobei jeder Airbag (108, 110) mindestens einen Gasgenerator oder Druckbehälter umfasst, der dazu ausgebildet ist, den jeweiligen Airbag (108, 110) innerhalb einer ersten Zeitspanne mit Gas zu befüllen, und die Steuerung (114) eine zweite Zeitspanne vor der bevorstehenden Kollision den mindestens einen Gasgenerator aktiviert oder den mindestens einen Druckbehälter öffnet, wobei die zweite Zeitspanne größer als die erste Zeitspanne ist.

3. Vorrichtung nach Anspruch 2, wobei der mindestens eine Airbag (108, 110) Öffnungen aufweist, durch die im Anschluss an das Befüllen während oder nach einer dritten Zeitspanne Gas entweicht, und wobei die Differenz zwischen der zweiten Zeitspanne und der ersten Zeitspanne kleiner als die dritte Zeitspanne ist.

4. Vorrichtung nach Anspruch 3, wobei die Öffnungen ein oder mehrere Ventile umfassen, die zur Einhaltung der dritten Zeitspanne von der Steuerung (114) gesteuert werden.

5. Vorrichtung nach einem der Ansprüche 1 bis 4, wobei der mindestens eine Airbag (108, 110) mindestens einen ersten Airbag (108) umfasst, der im gasbefüllten Zustand am Boden anliegt, und mindestens einen zweiten Airbag (110), der im gasbefüllten Zustand vom Boden beabstandet ist.

6. Vorrichtung nach Anspruch 5, wobei der mindestens eine zweite Airbag (110) im gasbefüllten Zustand von der Längsseite (104) des Nutzfahrzeugs horizontal weiter auskragt als der erste Airbag (108) im gasbefüllten Zustand von der Längsseite (104) des Nutzfahrzeugs horizontal auskragt.

7. Vorrichtung nach Anspruch 5 oder 6, wobei das Nutzfahrzeug (106) eine Sattelzugmaschine (106-1) und einen Sattelauflieger (106-2) umfasst, und wobei der mindestens eine zweite Airbag (110) mehrteilige oder mehrere entlang der Längsseite (104) benachbarte Airbags (110-1, 110-2, 110-3) umfasst, die dazu angeordnet sind, entsprechend einem Knickwinkel einer Sattelkupplung zwischen der Sattelzugmaschine (106-1) und dem Sattelauflieger (106-2) einen Knickwinkel zwischen den benachbarten Airbags auszubilden.

8. Vorrichtung nach einem der Ansprüche 5 bis 7, wobei der mindestens eine zweite Airbag (110) mehrteilige oder mehrere entlang der Längsseite (104) benachbarte Airbags (110-1, 110-2, 110-3) umfasst, die jeweils mit einem Gasgenerator oder Druckbehälter in Fluidverbindung stehen und zeitgleich aktivierbar sind.

9. Vorrichtung nach einem der Ansprüche 1 bis 8, wobei die Sensoren (112) eine Position und Geschwindigkeit des kabinenlosen Verkehrsteilnehmers (102) erfassen, und die Steuerung (114) ferner dazu ausgebildet ist, die Wahrscheinlichkeit der bevorstehenden Kollision und/oder den Zeitpunkt der bevorstehenden Kollision abhängig von der erfassten Position und/oder Geschwindigkeit zu berechnen.

10. Vorrichtung nach einem der Ansprüche 1 bis 9, wobei die Längsseite (104) die Beifahrerseite des Nutzfahrzeugs (106) ist, oder wobei die Airbags (108, 110) und Sensoren (112) an beiden Längsseiten (104) des Nutzfahrzeugs (106) angeordnet sind.

11. Vorrichtung nach einem der Ansprüche 1 bis 10, wobei das Nutzfahrzeug (106) eine Sattelzugmaschine (106-1) und einen Sattelauflieger (106-2) umfasst, und wobei mindestens ein Airbag des mindestens einen Airbags (108, 110) dazu ausgebildet ist, einen Spalt (120) zwischen der Sattelzugmaschine (106-1) und dem Sattelauflieger (106-2) auf zumindest einer horizontalen Ebene zu überdecken.

12. Vorrichtung nach einem der Ansprüche 1 bis 11, wobei die Steuerung (114) ferner dazu ausgebildet ist, in Reaktion auf die erfasste Annäherung des kabinenlosen Verkehrsteilnehmers (102) bei oder vor der Aktivierung des mindestens einen Airbags (108, 110) ein Außenwarnsignal auszugeben, vorzugsweise durch Steuern einer Hupe des Nutzfahrzeugs.

13. Nutzfahrzeug (106), vorzugsweise ein Sattelzug, umfassend eine Vorrichtung (100) gemäß einem der Ansprüche 1 bis 12.

## Claims

1. A device (100) for protecting a road user (102) without a cabin against impacts on a longitudinal side (104) of a utility vehicle (106), comprising:
at least one airbag (108, 110) which is arranged on a longitudinal side (104) of the utility vehicle (106) ;
sensors (112) which are designed to sense the approach of the road user (102) without a cabin to the longitudinal side (104); and
a controller (114) which has a signal-transmitting connection to the sensors (112) and to the at least one airbag (108, 110) and is designed to determine, on the basis of signals of the sensors (112), a probability, a location and/or a time of an imminent collision and to activate the at least one airbag (108, 110) as a function thereof;
**characterized in that**
the controller (114) is also designed to sense a turning off process of the motor vehicle (106) to the codriver's side, and to calculate the probability of the imminent collision and the location and/or the time of the imminent collision as a function of a cornering trajectory of the utility vehicle (106).

2. The device according to Claim 1, wherein each airbag (108, 110) comprises at least one gas generator or pressure container which is designed to fill the respective airbag (108, 110) with gas within a first time period, and the controller (114) activates the at least one gas generator or opens the at least one pressure container at a second time period before the imminent collision, wherein the second time period is longer than the first time period.

3. The device according to Claim 2, wherein the at least one airbag (108, 110) has openings through which gas escapes subsequent to the filling during or after a third time period, and wherein the difference between the second time period and the first time period is shorter than the third time period.

4. The device according to Claim 3, wherein the openings comprise one or more valves which are controlled by the controller (114) in order to maintain the third time period.

5. The device according to one of Claims 1 to 4, wherein the at least one airbag (108, 110) comprises at least one first airbag (108) which in the gas-filled state rests on the ground, and at least one second airbag (110) which in the gas-filled state is spaced apart from the ground.

6. The device according to Claim 5, wherein in the gas-filled state the at least one second airbag (110) extends out further horizontally from the longitudinal side (104) of the utility vehicle and the first airbag (108) extends horizontally out from the longitudinal side (104) of the utility vehicle in the gas-filled state.

7. The device according to Claim 5 or 6, wherein the utility vehicle (106) comprises a semi-trailer tractor (106-1) and a semi-trailer (106-2), and wherein the at least one second airbag (110) comprises multi-component or multiple airbags (110-1, 110-2, 110-3) which are adjacent along the longitudinal side (104) and are arranged so as to form a bending angle between the adjacent airbags corresponding to a bending angle of a fifth wheel between the semi-trailer tractor (106-1) and the semi-trailer (106-2).

8. The device according to one of Claims 5 to 7, wherein the at least one second airbag (110) comprises multi-component or multiple airbags (110-1, 110-2, 110-3) which are adjacent along the longitudinal side (104) and which have a fluidic connection to a gas generator or pressure container and can be activated simultaneously.

9. The device according to one of Claims 1 to 8, wherein the sensors (112) sense a position and speed of the road user (102) without a cabin, and the controller (114) is also designed to calculate the probability of the imminent collision and/or the time of the imminent collision as a function of the sensed position and/or speed.

10. The device according to one of Claims 1 to 9, wherein the longitudinal side (104) is the codriver's side of the utility vehicle (106), or wherein the airbags (108, 110) and sensors (112) are arranged on the two longitudinal sides (104) of the utility vehicle (106) .

11. The device according to one of Claims 1 to 10, wherein the utility vehicle (106) comprises a semi-trailer tractor (106-1) and a semi-trailer (106-2), and wherein at least one airbag of the at least one airbag (108, 110) is designed to cover a gap (120) between the semi-trailer tractor (106-1) and the semi-trailer (106-2) in at least one horizontal plane.

12. The device according to one of Claims 1 to 11, wherein the controller (114) is also designed to output an external warning system, preferably by controlling a horn of the utility vehicle, in reaction to the sensed approach of the road user (102) without a cabin, when or before the at least one airbag (108, 110) is activated.

13. A utility vehicle (106), preferably an articulated lorry, comprising a device (100) according to one of Claims 1 to 12.

## Revendications

1. Dispositif (100) permettant de protéger contre les chocs un usager de la route sans habillage (102) sur un côté longitudinal (104) d'un véhicule utilitaire (106), comprenant :
au moins un airbag (108, 110) disposé sur un côté longitudinal (104) du véhicule utilitaire (106) ;
des capteurs (112) qui sont réalisés pour détecter une approche de l'usager de la route sans habillage (102) sur le côté longitudinal (104) ; et
un système de commande (114) en communication de signaux avec les capteurs (112) et ledit au moins un airbag (108, 110) et qui est réalisé pour déterminer sur la base de signaux provenant des capteurs (112) une probabilité, un lieu et/ou un instant d'une collision imminente, et pour activer ledit au moins un airbag (108, 110) en conséquence ;
**caractérisé en ce que** le dispositif de commande (114) est en outre réalisé pour détecter un changement de direction du véhicule utilitaire (106) vers le côté passager, et pour calculer en fonction d'une trajectoire de virage du véhicule utilitaire (106) la probabilité de la collision imminente, le lieu et/ou l'instant de la collision imminente.

2. Dispositif selon la revendication 1, dans lequel chaque airbag (108, 110) comprend au moins un générateur de gaz ou un récipient sous pression qui est réalisé pour remplir de gaz l'airbag (108, 110) respectif dans une première période de temps, et le système de commande (114) active ledit au moins un générateur de gaz ou ouvre ledit au moins un récipient sous pression à une deuxième période de temps avant la collision imminente, la deuxième période de temps étant supérieure à la première période de temps.

3. Dispositif selon la revendication 2, dans lequel ledit au moins un airbag (108, 110) présente des orifices par lesquels s'échappe du gaz à l'issue du remplissage, pendant ou après une troisième période de temps, et dans lequel la différence entre la deuxième période de temps et la première période de temps est inférieure à la troisième période de temps.

4. Dispositif selon la revendication 3, dans lequel les orifices comprennent une ou plusieurs soupapes qui sont commandées par le système de commande (114) pour respecter la troisième période de temps.

5. Dispositif selon l'une quelconque des revendications 1 à 4, dans lequel ledit au moins un airbag (108, 110) comprend au moins un premier airbag (108) qui repose au sol à l'état rempli de gaz, et au moins un deuxième airbag (110) qui est espacé du sol à l'état rempli de gaz.

6. Dispositif selon la revendication 5, dans lequel ledit au moins un deuxième airbag (110), à l'état rempli de gaz, fait saillie horizontalement depuis le côté longitudinal (104) du véhicule utilitaire plus loin que le premier airbag (108), à l'état rempli de gaz, fait saillie horizontalement depuis le côté longitudinal (104) du véhicule utilitaire.

7. Dispositif selon la revendication 5 ou 6, dans lequel le véhicule utilitaire (106) comprend un tracteur routier (106-1) et une semi-remorque (106-2), et dans lequel ledit au moins un deuxième airbag (110) comprend plusieurs airbags (110-1, 110-2, 110-3), ou des airbags en plusieurs parties, adjacents le long du côté longitudinal (104), et qui sont agencés pour réaliser selon un angle d'articulation d'une sellette d'attelage entre le tracteur routier (106-1) et la semi-remorque (106-2) un angle d'articulation entre les airbags adjacents.

8. Dispositif selon l'une quelconque des revendications 5 à 7, dans lequel ledit au moins un deuxième airbag (110) comprend plusieurs airbags (110-1, 110-2, 110-3), ou des airbags en plusieurs parties, adjacents le long du côté longitudinal (104), et qui sont respectivement en communication fluidique avec un générateur de gaz ou un récipient sous pression et peuvent être activés en même temps.

9. Dispositif selon l'une quelconque des revendications 1 à 8, dans lequel les capteurs (112) détectent une position et une vitesse de l'usager de la route sans habillage (102), et le système de commande (114) est en outre réalisé pour calculer la probabilité de la collision imminente et/ou l'instant de la collision imminente en fonction de la position et/ou de la vitesse détectées.

10. Dispositif selon l'une quelconque des revendications 1 à 9, dans lequel le côté longitudinal (104) est le côté passager du véhicule utilitaire (106), ou dans lequel les airbags (108, 110) et les capteurs (112) sont disposés sur les deux côtés longitudinaux (104) du véhicule utilitaire (106).

11. Dispositif selon l'une quelconque des revendications 1 à 10, dans lequel le véhicule utilitaire (106) comprend un tracteur routier (106-1) et une semi-remorque (106-2), et dans lequel au moins un airbag dudit au moins un airbag (108, 110) est réalisé pour recouvrir un espace (120) entre le tracteur routier (106-1) et la semi-remorque (106-2) sur au moins un plan horizontal.

12. Dispositif selon l'une quelconque des revendications 1 à 11, dans lequel le système de commande (114) est en outre réalisé pour émettre un signal d'avertissement extérieur, de préférence en commandant un klaxon du véhicule utilitaire, en réaction à l'approche détectée de l'usager de la route sans habillage (102) au moment ou avant l'activation dudit au moins un airbag (108, 110).

13. Véhicule utilitaire (106), de préférence un tracteur routier, comprenant un dispositif (100) selon l'une quelconque des revendications 1 à 12.
